# EUROPEAN PATENT SPECIFICATION

(11) **EP 0 626 605 B1**
(45) Date of publication and mention of the grant of the patent: **03.12.1997**
(21) Application number: 94303871.1
(22) Date of filing: 27.05.1994
(51) Int. Cl.: G02B 26/10, G06K 7/10

(54) **Vibrating and rotating optical scanning device**
Schwingende und rotierende optische Abtastvorrichtung
Dispositif de balayage optique rotatif et vibrant

(30) Priority: 28.05.1993 JP 151500/93
(43) Date of publication of application: 30.11.1994
(73) Proprietor: OMRON CORPORATION, Kyoto 616 (JP)
(72) Inventor: Goto, Hiroshi, Tsukuba-city, Ibaraki 305 (JP)
(74) Representative: Calderbank, Thomas Roger

(56) References cited:
- EP-A- 0 412 544
- EP-A- 0 471 291
- EP-A- 0 532 205
- EP-A- 0 532 220
- GB-A- 2 075 762
- GB-A- 2 251 497

## Description

This invention is directed to an optical scanning device, an optical sensor device employing said optical scanning device, a device to read coded data and a point-of-sale (POS) system. More specifically, it the present invention is directed to an optical scanning device to be used with a laser beam printer, a bar code scanner, or an area scanner with a beam scanning scheme, and in particular an optical scanning device capable of scanning a light beam in two dimensions.

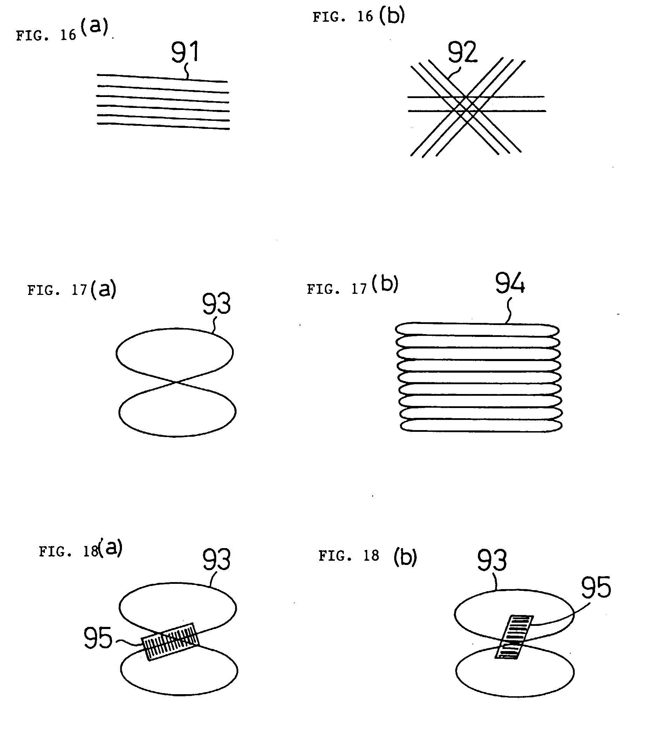

In the past, various schemes have been advanced to enhance the reading capability of bar code scanners which read a bar code by scanning a light beam. To prevent reading errors caused by a scratch or dirt on part of the bar code, and to ensure that the code be read properly, the polygonal scanner was developed. This scanner employed a raster scanning scheme by which a light beam was scanned along a number of parallel lines 91, as shown in Figure 16 (a).

The scheme by which the polygonal scanner operated was as follows. A polygonal mirror caused a light beam to scan as it rotated and reflected the beam. If each of the mirror surfaces was made to have a different slope with respect to the rotational axis of the polygonal mirror, the scanner could be realized with a relatively simple configuration. However, with a polygonal scanner using a raster scanning scheme, if the fixed orientation of the bar code, that is to say, the path along which the bar code is arranged, is not kept virtually parallel with the path along which the beam is scanning, the beam will fail to scan the entire code and consequently be unable to read it.

To insure that the light beam will make an accurate parallel scan of the bar code regardless of its orientation, a device was developed which used a hologram disc or a number of mirrors to scan a beam along the radial or X-shaped pattern 92, as shown in Figure 16 (b).

Bar code scanners like these, which can scan a beam of light in many directions or in a radial pattern, can can read bar codes with relative accuracy regardless of how the code may be oriented. For this reason they are widely used for such applications as supermarket checkouts where the orientation of the code will vary. However, this type of bar code reader requires a hologram disc or multiple mirrors to scan the beam of light in numerous directions, which results in the reader itself becoming a relatively large item. Further, since it is necessary to use a large number of extremely accurate optical components, the component cost and cost of assembly are both necessarily high, resulting in the bar code scanner having a high price tag.

To realize a two-dimensional optical scanning device which would be both small and low-priced, the current applicants developed an optical scanner which used two types of elastic resonant vibration of an elastically deformable unit (a torsion bar) (see EP-A- 471 291), and applied for a patent (Japan Patent Publication 4-95917 and U.S issued Patent 5,245,463). With this optical scanner, varying the ratio of the resonant frequencies of a vibrator which underwent resonant vibration in two dimensions allowed one to vary the pattern drawn by the scanning line. This scanning line depicted a Lissajous figure, which at a resonant frequency ratio of 1:2 would resemble the figure eight pattern 93, as shown in Figure 17 (a). If the resonant frequency ratio were changed to 1:10, one would obtain scanning line 94 shown in Figure 17 (b), which is equivalent to the raster scanning discussed earlier. This scheme allowed the scanner to read bar codes more accurately when the code was on a slant or when it was scratched or dirty.

However, scanning a beam of light in the figure eight pattern shown in Figures 17 (a) and (b) limits the scan to a maximum of two directions. If scanning line 93 shown in Figure 18 (a) conforms to the orientation of bar code 95, the code can be read, but situations arise in which bar code 95 is not scanned from one end to the other along its length, as shown in Figure 18 (b). In this situation, the bar code cannot be read.

There is a demand for an optical scanner which can scan a light beam over the entire bar code no matter how that code may be oriented, and read the code in a reliable fashion. This would increase the speed at which the coded data in a bar code can be read and improve the accuracy of the reading. There is also a demand for an optical scanner with a simple configuration which is compact and economically priced.

In light of the shortcomings of the existing technology, an objective of this invention is to provide a compact, simple optical scanner preferred embodiments of which are able to scan a beam of light in any direction. Such an optical scanner will find its primary application as a device to read coded data, since it will be able to read coded data reliably regardless of how the bar code is oriented.

The optical scanning device of this invention has a mirror which reflects light; a vibrating element; and a vibrator having at least one mode of resonant vibration with an element capable of elastic deformation which connects the aforesaid mirror and vibrating element. When vibration is induced in the vibrating element, resonant oscillation is induced in the elastically deformable shaft, thus causing the mirror to move. This optical scanner is distinguished by the fact that it has a device which causes the aforesaid vibrator to rotate on an axis which is virtually perpendicular with respect to the aforesaid mirror in its resting state, which is such that the point at which the beam of light is reflected is virtually in the center of the mirror.

In the optical scanning device described above, it is desirable that the aforesaid deformable shaft have at least two modes of resonant vibration, and that the frequency ratio of the resonant frequencies of two of these resonant modes be 1:N (where N is at least 2).

It is also desirable that the device to rotate the aforesaid vibrator cause the vibrator to rotate less than 180° in any direction using a reference position as a starting point.

It is further desirable that the device to rotate the aforesaid vibrator be a mechanism which rotates the vibrator in a periodic fashion, and that the period of its rotation be set so that it is longer than the longest period of resonant vibration of the vibrator.

Further, the device to rotate the aforesaid vibrator can cause the vibrator to rotate in step fashion corresponding to each specified angle which was set.

Vibration can be induced in the vibrating element either by a laminated piezoelectric element or by an element using electrostatic force.

At least one of the aforesaid vibrator and the aforesaid device which rotates it may consist of a single-crystal silicon wafer.

The optical sensor of this invention is equipped with the aforesaid optical scanning device; a light source which emits a beam of light; a photodetector element which detects the intensity of the light; and a device which processes the electrical signals output by the photodetector element. This optical sensor is distinguished by the fact that the beam of light emitted by the aforesaid light source is made to scan by the aforesaid scanning device so that the light reflected by an object can be detected. In this way such data as the presence of an object or its shape can be detected.

Another optical sensor of this invention is equipped with the aforesaid optical scanning device; a light source which emits a beam of light; a photodetector element which detects the intensity of the light; a device which processes the electrical signals outputted by the photodetector element; and a device which detects the position of the light beam which is being made to scan by the aforesaid optical scanning device. This optical sensor is distinguished by the fact that the beam of light emitted by the aforesaid light source is made to scan by the aforesaid scanning device so that the light reflected by an object can be detected. Based on the scanning position data detected by the aforesaid detector device, the position, shape, dimensions and other data concerning the object can be ascertained.

In the optical sensor described above, the light beam emitted by the aforesaid light source may be the beam emitted by a semiconductor laser, and the light beam reflected by the aforesaid optical scanning device may have a round cross section with a vertical-to-horizontal ratio of 1:1.

The device to read coded data provided by this invention is distinguished by the fact that the object to be detected is an object which has on it data coded in such form as a bar code, a multistage bar code, or two-dimensional code in the form of a matrix; and by the fact that the aforesaid coded data are read using the aforesaid optical sensor.

In the data reader described above, the aforesaid vibrator may be caused to rotate by the aforesaid rotator device in the aforesaid optical scanning device in the same orientation as that in which the coded data were input beforehand, so that the light beam is made to scan virtually parallel to the path along which the aforesaid coded data have been arranged.

Alternatively, the data reader may have a device to determine the orientation of the coded data, and the said device may determine the orientation of the data. The aforesaid rotator device in the aforesaid optical scanning device may be driven relatively to the orientation which has been determined, and the beam of light may be made to scan virtually parallel to the path along which the aforesaid coded data has been arranged.

The data reader may also have a device to store the angle of rotation of the aforesaid vibrator in the aforesaid optical scanning device when the coded data has been read. The next time coded data is to be read, the rotation of the aforesaid vibrator can be begin from the position dictated by the previous angle of rotation, which is stored in the aforesaid storage device.

The POS system provided by this invention is distinguished by the fact that it has at least one of the aforesaid devices to read coded data, and by the fact that it reads the coded data on each product; checks this data against product data such as name of product and price, which is stored previously in an external memory unit; displays the result of the data check; and stores this result in a second memory unit.

In the optical scanning device according to the present invention, the entire vibrator is made to rotate. This allows a beam of light to be scanned in whatever direction is desired and frees one from a reliance on -a scanning pattern for the beam which depends upon the vibrator. Rotating the entire vibrator causes the scanning pattern itself to rotate, allowing the beam to scan every part of the scanning region.

The point at which the beam of light is reflected is virtually in the center of the mirror when it is at rest. The vibrator is made to rotate on an axis which is virtually perpendicular with respect to the resting mirror. Thus, even when the scanning pattern rotates, the scanning region will scarcely move. The scanning pattern drawn by the beam of light can be made to rotate within a scanning region which remains virtually constant.

A small, simply configured optical scanning device is used as a foundation, and the only necessary addition is a mechanism to cause the vibrator to rotate. Thus, we can realize an optical scanning device with a simple configuration.

By using the aforesaid optical scanning device in an optical sensor, we can ascertain such data as the presence, position, or shape of an object in a reliable fashion regardless of its shape (which might, for example, be flat), or its orientation.

If the aforesaid optical sensor is used in a code reader which can read data coded in such forms as bar codes, multistage bar codes, or two-dimensional codes in the form of matrices, the light beam can be scanned along the coded data no matter how the data is oriented, and the data can be read accurately. If the vibrator has at least two modes of resonant vibration, the ratio of its resonant frequencies can be set so that the light beam makes a raster scan. By rotating this scanning pattern, we can prevent reading errors which may arise when the coded data is scratched or dirty. Furthermore, this scheme allows the data to be read accurately regardless of their orientation.

Embodiments of the present invention will now be described, by way of example, with reference to the accompanying figures, in which;

Figure 1 is a perspective view of a preferred embodiment of the optical scanning device according to the present invention.

Figures 2 (a) and (b) are perspective views of twisting and bending resonant modes, respectively, of the scanner in Figure 1.

Figure 3 is a perspective view showing the same scanner making a two-dimensional scan.

Figure 4 is a block diagram of the drive circuit for that scanner.

Figures 5 (a) and (b) show scanning patterns traced by the light beam scanned by the same optical scanning device.

Figure 6 (a) shows a desirable scanning pattern for the light beam, and Figure 6 (b) an undesirable pattern.

Figure 7 is a perspective view of another preferred embodiment of the scanning device according to the present invention.

Figure 8 is a partially cut-away frontal view of the same device.

Figure 9 is a simplified block diagram of an optical sensor device according to this invention.

Figure 10 is a simplified block diagram of another optical sensor device in which this invention has been implemented.

Figure 11 shows the relationship between possible orientations of the coded data and the direction in which the light beam scans.

Figure 12 is a simplified block diagram of another ideal embodiment of the device to read coded data provided by this invention.

Figure 13 is a simplified block diagram of another ideal embodiment of the device to read coded data provided by this invention.

Figure 14 is a simplified block diagram of yet another ideal embodiment of the device to read coded data provided by this invention.

Figure 15 is a simplifier block diagram of a POS system provided by this invention.

Figure 16 (a) shows a raster scanning pattern, and Figure 16 (b) shows a radiant scanning pattern.

Figure 17 (a) shows a figure eight scanning pattern, and Figure 17 (b) shows a raster scanning pattern.

Figure 18 (a) shows a scanning pattern correctly aligned with the bar code, and Figure 18 (b) shows a scanning pattern which is not aligned with the bar code.

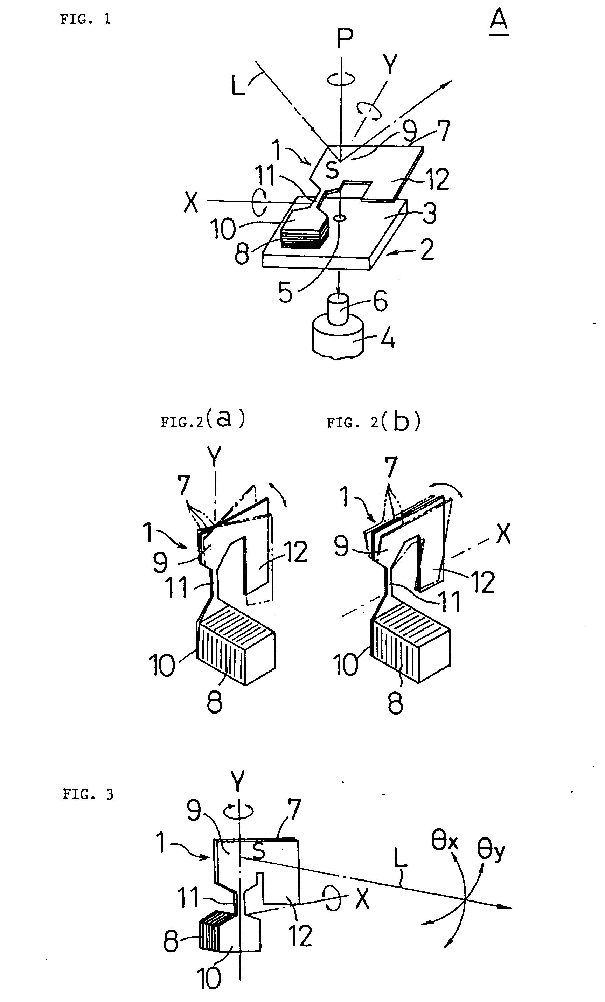

Figure 1 is a perspective view of optical scanning device A, a preferred embodiment of this invention. The device A comprises a scanner 1 and rotary device 2, which causes scanner 1 to rotate. The rotary device 2 comprises stage 3, which supports the scanner 1, and rotational actuator 4, for example a stepping motor or DC servomotor, which causes stage 3 to rotate on axis P. A hole 5 in stage 3 receives an end of output shaft 6 of actuator 4.

As shown in Figure 1, the scanner 1 comprises a flat vibrator (scanning element) 7, which is formed of a silicon wafer, and a laminated piezoelectric element (drive source) 8. The flat vibrator (scanning element) 7 is provided with mirror (surface) 9 that reflects light; vibrating element 10, which serves as a fixed component; elastically deformable shaft 11, which connects mirror 9 to vibrating element 10; and a weight 12 on one side of mirror 9. The elastically deformable shaft 11 has two modes of resonant vibration, a twisting mode (with resonant frequency f_{T}) and a bending mode (with resonant frequency f_{B}) The piezoelectric element (drive source) 8, which serves as a source of vibration is connected to vibrating element 10 on scanning element 7.

When piezoelectric element (drive source) 8 is made to vibrate at a frequency equal to the resonant frequency f_{T} of the twisting mode, its vibration is transmitted to elastically deformable shaft 11 through vibrating element 10. The deformable shaft 11 undergoes resonant vibration in the twisting mode, and mirror 9 rotates on shaft Y of deformable shaft 11.

When piezoelectric element 8 is made to vibrate at a frequency equal to the resonant frequency f_{T} of the twisting mode, its vibration is transmitted to elastically deformable element 11 through vibrational input unit 10. The deformable element 11 undergoes resonant vibration in the twisting mode, and mirror 9 rotates on shaft Y of element 11, as shown in Figure 2 (a). If a light beam L is made to strike mirror 9 at this time, the reflected light beam L will scan along path Θ_{y} (Figure 3). Similarly, if piezoelectric element 8 (drive source) is made to vibrate at a frequency equal to the resonant frequency f_{B} of the bending mode, its vibration will be transmitted to elastically deformable shaft 11 through vibrating element 10. Deformable shaft 11 will undergo resonant vibration in the bending mode, and mirror 9 will rotate on axis X, which is orthogonal to axis Y, as shown in Figure 2 (b). If a light beam L is made to strike mirror 9 at this time, the reflected light beam L will scan along path Θₓ (Figure 3).

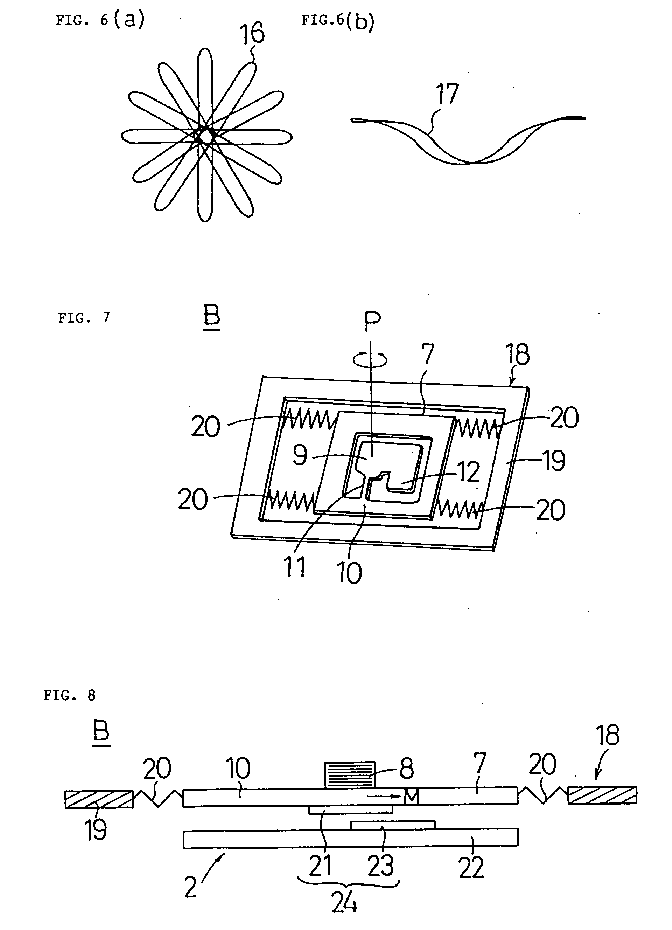

If an AC voltage is applied to piezoelectric element (drive source) 8 of a frequency equal to resonant frequency f_{T} of the twisting mode and an AC voltage is applied of a frequency equal to resonant frequency f_{B} of the bending mode (i.e. are superimposed), then the deformable shaft 11 will simultaneously undergo resonant vibration in both twisting and bending modes causing mirror 9 to rotate on both its X and Y axes. The light beam L reflected by mirror 9 will scan along both paths Θₓ and Θ_{y}, thus making a two-dimensional scan as shown in Figure 3. The scanning pattern traced by scanner 1 is determined by the ratio of the resonant frequency of bending mode to that of twisting mode, f_{B}:f_{T}. If this ratio is 1:2, the scanner will trace a figure eight pattern like pattern 13 in Figure 5 (a). If the ratio f_{B}:f_{T} is 1:10, the scanning pattern will be the raster scan in Figure 17 (b). If a ratio of 1:1 is used, a linear scanning pattern will be achieved. If a ratio close to 1:1 is chosen for f_{B}:f_{T}, the scanning pattern will be a flat elliptical pattern approaching a straight line. However, when the ratio of f_{B}:f_{T} is nearly 1:1, the phases of both modes of resonant vibration will produce a round scanning pattern, which will make it ineffectual to rotate the pattern. For this reason, it is desirable that the ratio f_{B}:f_{T} (or f_{T}:f_{B}) of the resonant frequencies of vibrator (scanning element) 7 be at least 1:2, that is, 1:N (where N ≥ 2).

The other end of piezoelectric element (drive source) 8 on scanner 1 is fixed to the aforesaid stage 3. Scanning element 7 is arranged so that it is virtually parallel to the surface of stage 3. Scanner 1 is positioned so that when the scanner is at rest, mirror 9 is perpendicular to axis of rotation P. Light beam L is made to strike mirror 9 in the vicinity of the point where it is intersected by axis of rotation P.

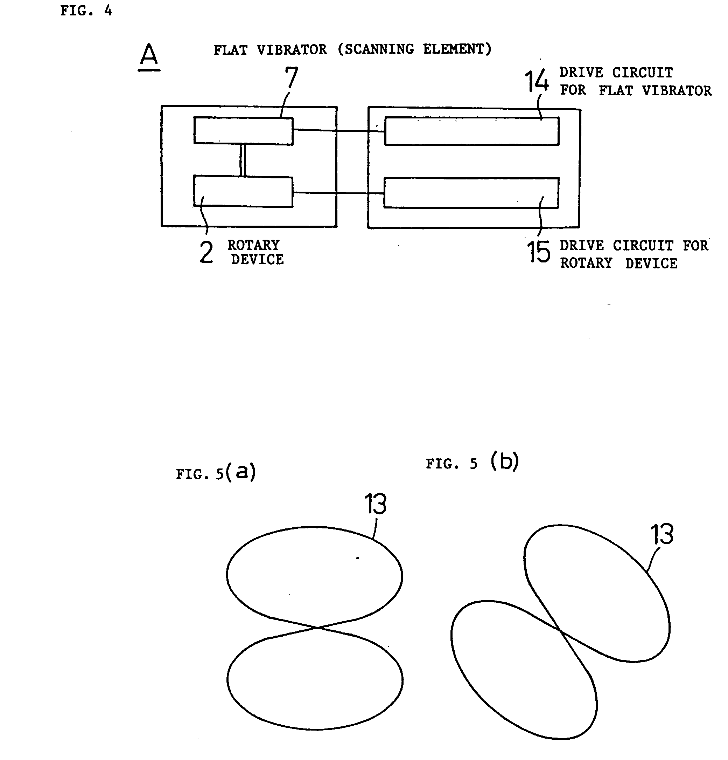

Figure 4 is a diagram of the structure of the drive circuit for optical scanning device A. It comprises a drive circuit for the flat vibrator (scanning element) 14, which causes piezoelectric element (drive source) 8 to vibrate scanning element 7, and drive circuit for rotary device 15, which drives rotary device 2 to cause scanner 1 to rotate. Drive circuit 15 is prompted by a rotation command from the exterior to transmit a signal to rotary device 2, and scanner 1 is made to rotate on axis of rotation P.

We shall next explain the operating principle of the aforesaid optical scanning device A. Point S, in the vicinity of the point where axis of rotation P intersects mirror 9, is the point where light beam L is reflected. A light beam L is emitted by a light source which is aimed at this point S. As scanner 1 is driven by drive circuit 14, the light beam L which is reflected by mirror 9 will be made to scan in a one or two-dimensional pattern depending on the ratio f_{B}:f_{T} of the resonant frequencies. At the same time, scanner 1 can be made to rotate on axis P when drive circuit 1 causes stage 3 to rotate. As the entire scanner 1 rotates, the X and Y axes, which are the axes of rotation of the two modes of resonant vibration, rotate on axis P. This causes the scanning pattern traced by light beam L reflected by mirror 9 also to rotate in like fashion on axis P. Let us consider the example of a two-dimensional scan such that the ratio f_{B}:f_{T} of the resonant frequencies is 1:2. If the beam of light L is scanned along figure eight pattern 13 oriented as shown in Figure 5 (a), when scanner 1 is rotated by 45° on axis P, scanning pattern 13 will also acquire a slope of 45°, as shown in Figure 5 (b). If scanner 1 is rotated another 45° so that it is now 90° from its original orientation, scanning pattern 13 will be perpendicular to the orientation pictured in Figure 5 (a). By rotating scanner 1, then, we can cause the scanning pattern to face any direction we choose. Although the case we have been discussing is a two-dimensional scan, light beam L can be made to scan in one dimension in like fashion, by rotating scanner 1 to rotate the orientation of the scanning pattern.

In the resting state, mirror 9 is perpendicular to axis of rotation P, and light beam L is reflected at point S, which is near the point where axis P intersects the mirror. Thus, when vibrator 7 is made to rotate by rotary device 2, the center of the scanning pattern remains virtually unchanged even though the scanning pattern traced by light beam L is rotated. In other words, even though the scanning pattern rotates, the scanning region is virtually unchanged, and light beam L can be made to scan a fixed region.

The aforesaid rotary device 2 can be driven by various schemes. If rotary device 2 is rotated in only one direction, it will prove difficult to manage the signal cable which connects it to piezoelectric element (drive source) 8 on scanner 1, which is mounted to the top of rotary device 2. Ideally, rotary device 2 should rotate to both right and left alternately. By the same token, it would be difficult to supply power to piezoelectric element (drive source) 8 if rotary device 2 were to be rotated more than one complete rotation in a single direction. It is desirable that the angular range of revolution of rotary device 2 in a single direction be limited to prevent it from completing one revolution. (Ideally, it should be no greater than 180° from the starting point.) Rotary device 2 may rotate scanner 1 in step fashion over a series of fixed angles, by repeatedly rotating and stopping while increasing the slope of the scanning pattern at each stopping point; or scanner 1 may be rotated continuously while the scanning pattern is generated continuously at every point. If scanner 1 is to be rotated in step fashion, a stepping motor may be used for rotational actuator 4; or the angle of rotation may be detected and a servomotor may be used to control that angle. If scanner 1 is to be rotated continuously, an actuator employing resonant vibration or an actuator mechanism which can control speed may be used for rotational actuator 4. If a resonant actuator is used for rotational actuator 4, its frequency of rotation must be lower than the lowest resonant frequency of scanning element 7. If it is not, it will be impossible to rotate the scanning pattern. Let us consider the case in which scanner 1 is vibrating at a frequency at which f_{B} = f_{T} and causing light beam L to make a one-dimensional scan. If the period 1/f_{B} of the vibration of scanning element 7 is smaller than the period of rotation of rotating mechanism (rotary device) 2, the scanning pattern shown in Figure 6 (a) will be rotated intact successively, achieving the ultimate effect of the radiant scanning pattern 16. If, on the other hand, the scanning pattern is rotated in 90° increments at a period of rotation of 1/(2f_{B}), which is half the period of vibration 1/f_{B} of scanning element 7, the scanning line will be curved, resulting in scanning pattern 17 shown in Figure 6 (b), and the original scanning pattern will not be maintained.

If scanner 1 is made to rotate alternately to left and right by rotary device 2 as described above, the configuration of optical scanning device A (and in particular the configuration of components by which power is supplied to piezoelectric element 8) can be kept simple. However, it would also be possible to use brushes or some other means to supply power to piezoelectric element 8 so that rotary device 2 can rotate scanner 1 in just one direction.

If scanner 1 is rotated either in step fashion or continuously by rotary device 2 while a light beam L is scanned in a given pattern, the scanning pattern will rotate along with scanner 1, and a pattern such as the radiant loops of Figure 6 (a) can be achieved, with the result that light beam L is scanned in various directions. Rotating the scanning pattern also allows light beam L to cover the entire scanning region. Optical scanning device A is composed of compact, inexpensive scanner 1, which comprises a flat scanning element 7 and piezoelectric element 8, and a simple rotary device 2. This design allows us to produce a simply configured optical scanning device A which is compact and low-priced.

Rotary device 2 can be used to rotate scanner 1 continuously, or it can rotate scanner 1 as needed. For example, when optical scanning device A is switched on, scanner 1 can be rotated in a given direction by rotary device 2, andit comes to rest light beam L can be made to scan. Alternatively, scanner 1 can be rotated by rotary device 2 in response to changed circumstances and light beam L made to scan when it comes to rest.

Optical scanning device A in the example discussed above used a stepping motor or DC servomotor, which are items that can be purchased, for rotary device 2. To make mechanism of rotary device 2 smaller and lighter, scanning element 7 and part of rotary device 2 can be made as a single piece, as in the part of optical scanning device B shown in Figure 7. This preferred alternative device B includes a scanning wafer 18, which is used in optical scanning device B. Scanning element 7 is placed inside support frame 19, where it is elastically supported by springs 20. Vibrating element 10 on scanning element 7 has the form of a frame which surrounds mirror 9. The inner edge of vibrating element 10 and mirror 9 are connected by elastically deformable shaft 11. Scanning wafer 18, which comprises support frame 19, springs 20 and vibrator (scanning element) 7, can be manufactured using a microprocess on, for example, a single-crystal silicon wafer.

Piezoelectric element 8 is attached as a source of vibration in the spot where deformable shaft 11 is provided on frame-shaped vibrating element 10. Vibration which conforms to the resonant-frequency of deformable shaft 11 is induced in scanning element 7 by piezoelectric element 8. In this way deformable shaft 11 is made to undergo resonant vibration, causing mirror 9 to rotate with support frame 19 fixed. Rotational force can be supplied from the exterior to scanning element 7, which is supported elastically within frame 19 by springs 20, by using electrostatic or electromagnetic force.

Such force might be supplied by electrostatic actuator 24 shown in Figure 8. This actuator consists of multiple electrode wafers 21, which are arranged symmetrically with respect to rotation on the bottom surface of vibrating element 10 on scanning element 7; and multiple electrode wafers 23, which are arranged symmetrically with respect to rotation on the top surface of fixed substrate 22, which is placed so that it faces scanning element 7. Electrode wafers 21 and 23 are slightly shifted with respect to each other. When voltage is applied between them and electrostatic force is generated, electrode wafer 21 on scanning element 7 is drawn toward electrode wafer 23 on fixed substrate 22. This causes scanning element 7 to rotate in direction M. In this embodiment, rotary device 2 comprises support frame 19, springs 20, fixed substrate 22 and electrostatic actuator 24 (electrode wafers 21 and 23). Rotary device 2 can cause scanning element 7 to rotate on axis P, which is perpendicular to mirror 9 when it is at rest; and the scanning pattern can be made to rotate while light beam L, which is reflected by mirror 9, is scanning. Also, in this embodiment, scanning element 7 can be made to rotate without an actuator being in contact with it, and rotary device 2 will weigh less than its predecessors.

In both of the examples discussed above, a laminated piezoelectric element 8 is used as the source which induces vibration in scanning element 7. However, other sources of vibration might also be used, such as a compact actuator (not pictured) which employs electrostatic force.

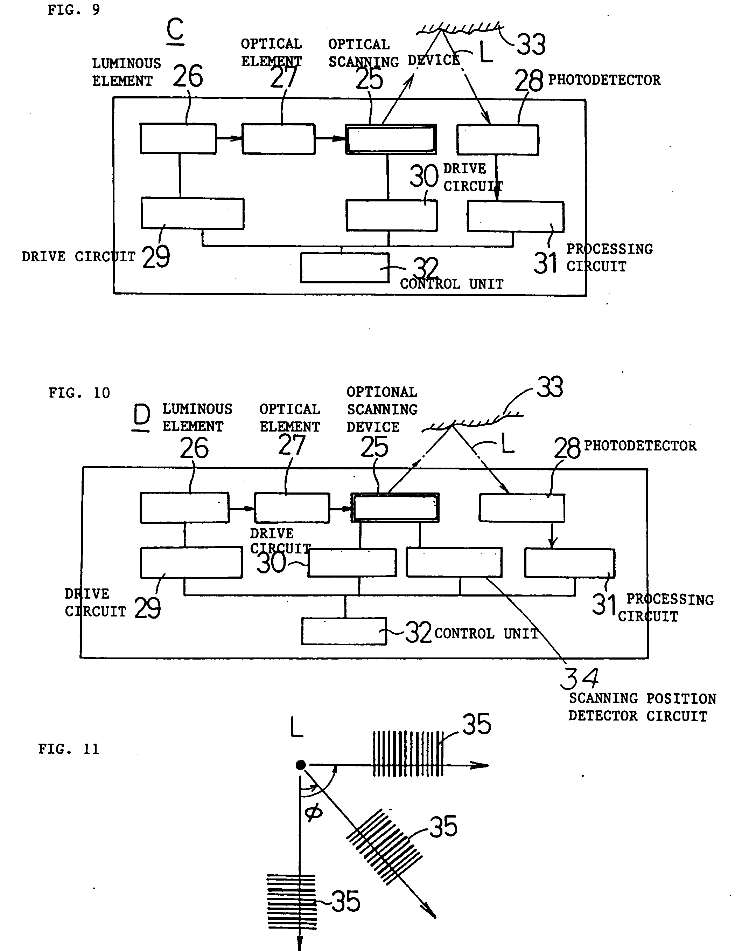

Figure 9 is a block diagram of an ideal embodiment of an optical sensor device C provided by this invention. Optical sensor C consists of the optical scanning device 25 of this invention, which was described above; a light source comprising luminous element 26, which is a semiconductor laser element or the like, and optical element 27, which is a lens; photodetector 28, which is a photodiode or the like; drive circuit 29, which drives luminous element 26, causing it to emit a light beam L; drive circuit 30, which drives scanner 1 in optical scanning device 25 and rotary device 2; processing circuit 31, which electrically processes the photodetection signals from photodetector 28; and control unit 32, which controls drive circuits 29 and 30 and processing circuit 31. In optical sensor C, the light beam L emitted by luminous element 26 is aimed at the detection region by optical scanning device 25 and made to scan along a two-dimensional pattern within that region. If at this time an object 33 is in the detection region, the light beam L reflected by object 33 will be detected by photodetector 28. When the photodetection signal output by photodetector 28, which detects light beam L, is processed and analyzed by processing circuit 31, the presence of object 33 in the detection region can be ascertained, as can its shape and certain other features. Since the scanning pattern of light beam L is rotated, the scan can cover the entire detection region, and it can be repeated in numerous orientations. Even a small or flat object 33 can be detected accurately.

Figure 10 shows optical sensor device D, another ideal embodiment of this invention. It features a scanning position detector circuit 34, which monitors the scanning position of light beam L. Scanning position detector circuit 34 might, for example, ascertain the scanning position (or the scanning direction) of light beam L by monitoring the drive signals to rotary device 2 and vibrator (scanning element) 7 in optical scanner 25. Or a sensor might be used to determine the distortion of a piezoelectric resistor element in the vicinity of deformable shaft 11 on vibrator (scanning element) 7, thereby detecting the angle of rotation of mirror 9, and scanning position detector circuit 34 can detect the scanning position of light beam L from the drive signal to rotary device 2 and the output of the distortion sensor. If the position of scanning light beam L at a given moment, which is detected by photodetector 28, is known to scanning position detector circuit 34, it will then know the position of the object 33 in the scanning region. The device will be able quantitatively to determine the position, shape, dimensions and other features of object 33, and a scanning micrometer or the like can be used to measure the dimensions.

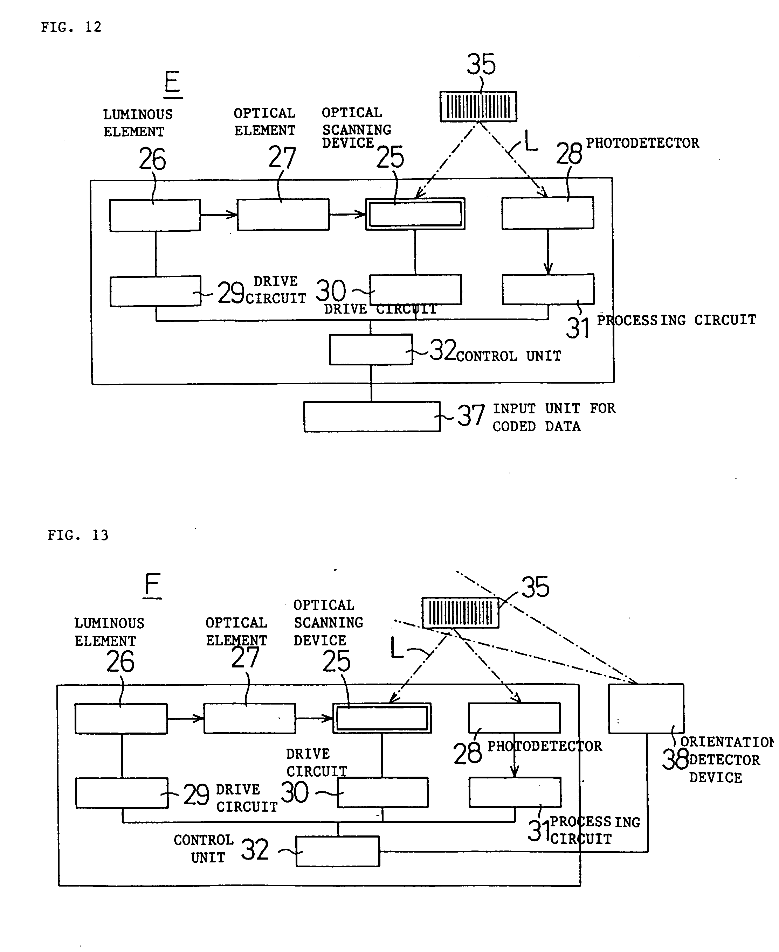

Like optical sensor C in Figure 9, optical sensor D can be used to read coded data including bar codes, multistage bar codes and two-dimensional codes in matrix form. Thus, it too can be used as a device to read coded data (diagram is abbreviated) with the help of optical scanning device 25, which is provided by this invention. Photodetector 28 detects reflected light which corresponds to the bars and spaces of the bar code, and from these photodetection signals, processing circuit 31 can decode the bar code. With this type of data reader, the orientation in which light beam L is scanning rotates. No matter which way the data of the bar code is facing, there will come a moment during the rotation of the scanning pattern when light beam L is scanning parallel to the arrangement of the coded data. At this moment, the data can be read. As shown in Figure 11, as the scanning pattern rotates, the angle φ at which light beam L is scanning changes. No matter which way data code 35 is oriented, light beam L can be scanned parallel to it. The bar code can be read accurately regardless of the orientation of coded data 35. Since light beam L is scanned vertically, horizontally and diagonally in the device to read coded data (just as with optical sensor D), it is desirable that the shape of the beam when it intersects object 33 be identical in every direction. The ideal light beam L would be one with a round cross section, as in Figure 11, with a vertical-to-horizontal ratio of nearly 1:1. Thus, a semiconductor laser would be a good choice for the luminous element 26. If a raster pattern (Figure 17 (b)) is chosen as the scanning pattern to be obtained when scanner 1 is at rest, it will be unlikely that scratches or dirt on the bar code will result in erroneous readings. When a raster pattern is rotated vertically, horizontally and diagonally, the code can be read accurately regardless of its orientation.

If a data reader has a detector circuit like scanning position detector circuit 34 in optical sensor D shown in Figure 10, which monitors the position of light beam L as it scans, it will be able accurately to read two-dimensional matrix codes, in which data are coded in two dimensions.

Figure 12 is a simplified block diagram of device E, another ideal embodiment of the device to read coded data provided by this invention. Code reader E has an input unit 37 on its control unit 32. The operator can input the orientation of input unit 37 with respect to a bar code label. When the orientation of coded data 35 is entered via input unit 37, control unit 32 can rotate rotary device 2 so that the scanning direction of light beam L matches the orientation of coded data 35. Code reader E can be used effectively in situations where the orientation of coded data 35 will change periodically, such as inspection of product lots, each of which will be oriented in one direction.

Figure 13 is a simplified block diagram of device F, yet another ideal embodiment of the device to read coded data provided by this invention. Device F has a orientation detector device 38 to detect the orientation of coded data 35. Orientation detector device 38 may, for example, use a photoelectric sensor to detect a bar code label or the orientation, shape, and so on of a product to which a bar code label is affixed. In this way it can detect the orientation of the coded data 35 in the bar code. When the orientation of data 35 is detected by orientation detector device 38, control unit 32 drives rotary device 2 so that light-beam L will be made to scan in the direction in which data code 35 is oriented, and the data are read. Code reader F is ideally suited to applications in which the orientation of data code 35 is different for every product that has a code on it. It would, for example, be ideal for a supermarket checkouts.

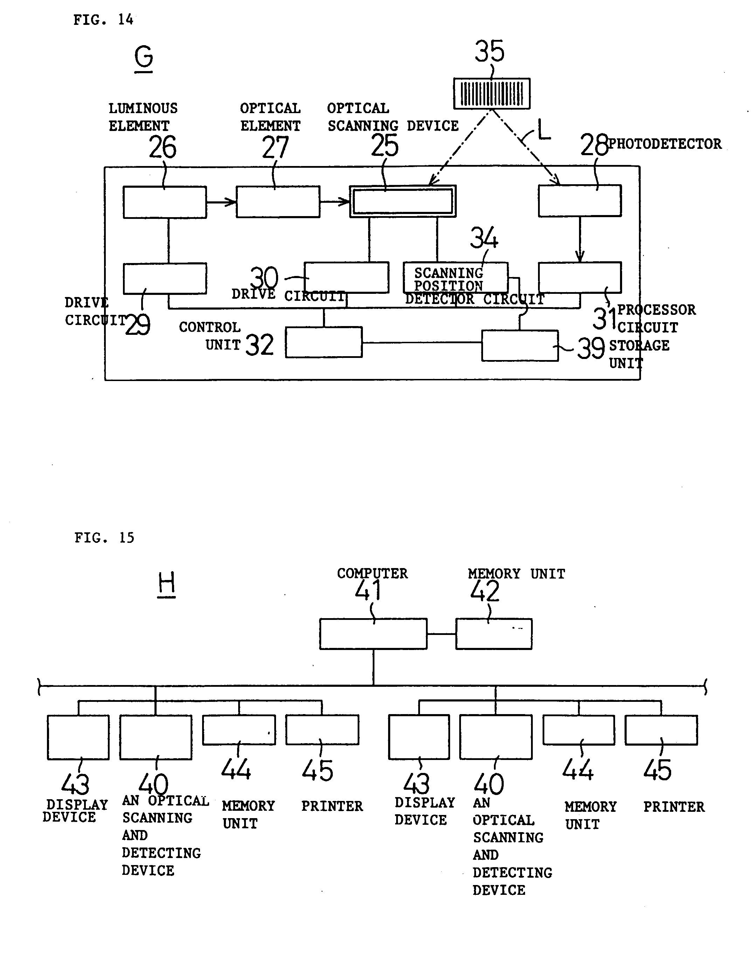

Figure 14 is a simplified block diagram of device G, yet another ideal embodiment of the device to read coded data provided by this invention. Device G has a memory device 39 which remembers the angle of rotation of rotary device 2 or vibrator (scanning element) 7 when a data code 35 has been read successfully. When another code 35 is to be read, the previous angle of rotation stored in memory device 39 is read out, rotary device 2 is rotated over that angle, and the operation of reading code 35 is begun. This scheme increases the speed with which code 35 can be read and it improves the hit rate.

Figure 15 is an abbreviated block diagram of POS (point of sales) control system H according to this invention. POS system H has an optical scanning and detecting device 40 according as this invention 40, which may have a single bar code scanner or a number of scanners. Optical scanning and detecting device 40 reads the codes 35 which come its way. Various data concerning each product, such as name of product, price and stock number, are stored in memory unit 42 of computer 41. When optical scanning and detecting device 40 reads coded product data 35, the data is checked against the product data stored in memory unit 42. Certain items of this data will be displayed on the display device 43, which is connected to each optical scanning and detecting device 40 and stored in a second memory (e.g. memory unit 44). The product data stored in memory unit 44 is printed out by printer 45 as needed.

Using an optical scanning and detecting device 40 which employs the optical scanning device 25 of this invention in a POS system H for product or stock control will ensure that coded data 35 are read accurately and will improve the reliability of POS system H.

In the preceding discussion, we have discussed a compact, lightweight, low-priced optical scanning device which can scan in any direction, an optical sensor device in which this scanning device is employed, and a device to read coded data. The configuration and other features of the vibrator shown therein are furnished merely for the sake of example, and the shape is not limited to that shown in the drawings. Any material, dimensions, or method of production may be chosen for the vibrator so long as the desired results are achieved. Similarly for the rotary device, the rotational actuator may be of any type, shape or form which yields the desired results.

In the optical scanning device of this invention, the vibrator is rotated to cause the pattern scanned by a beam of light to rotate. This scheme allows the light beam to be scanned in whatever direction is desired, and it ensures that the beam will cover the entire scanning region. Furthermore, although the scanning pattern is rotated, the scanning region remains virtually unchanged, thus ensuring that the pattern in which the beam is scanned will be rotated within a virtually constant scanning region.

Adding a mechanism to rotate the vibrator to a small, simply configured optical scanning device (the scanner) is an easy way to realize a compact, simple optical scanning device, and it keeps the production cost low.

If the ratio of the resonant frequencies of the two resonant modes is set at 1:N, where N is at least 2, the light beam will trace a pattern which is not a straight line. In this way the light beam can be made to scan in more directions.

If the rotation of the vibrator is kept to within 180° in each direction, it will be easier to supply power to the source of vibration. The power connections for the source of vibration will not cause interference when the vibrator rotates.

The configuration of the optical scanning device can be simplified if at least one of the vibrator and the device which rotates it consists of a single-crystal silicon wafer.

By using the aforesaid optical scanning device in an optical sensor, we can ascertain such data as the presence, position, or shape of an object in a reliable fashion regardless of its shape (which might, for example, be flat) or its orientation.

If the light beam reflected by the vibrator has a round cross section with a vertical-to-horizontal ratio of 1:1, its cross section will not vary no matter what direction the beam scans in. This will improve the detecting sensitivity of the optical sensing device.

If the optical sensor described above is used in a code reader which reads bar codes, multistage bar codes and two-dimensional codes in the form of matrices, it will allow a light beam to be scanned along a code no matter which way that code is facing so that the coded data can be read accurately. If the vibrator has at least two modes of resonant vibration, the ratio of its resonant frequencies can be set so that the light beam makes a raster scan. By rotating this scanning pattern, we can prevent reading errors which may arise when the coded data are scratched or dirty. Furthermore, this scheme allows the data to be read accurately regardless of their orientation. Thus, this scheme enhances the reliability of the device for reading coded data and of the POS system in which it is used.

If when the initial data has been read the angle of rotation of the aforesaid vibrator in the aforesaid optical scanning device is stored, the next time coded data are to be read, the rotation of the aforesaid vibrator can be begun from the position dictated by the previous angle of rotation, which is stored in the aforesaid storage device. This allows the direction of the light beam to be matched quickly to the orientation of the coded data.

## Claims

1. An optical scanning device, comprising:
a scanner (1), including:
a scanning element (7) provided with a mirror surface (9);
an elastically deformable shaft (11) for freely supporting at one end thereof said scanning element (7), said deformable shaft (11) being capable of flexure, and having at least two modes of resonance vibration ;
a vibrating element (10) provided on another end of said deformable shaft (11), wherein said scanning element (7), said deformable shaft (11), and said vibrating element (10) are integrally formed as a flat plate-like member; and
a drive source (8) for inducing vibrations in said vibrating element (10), said drive source (8) is capable of inducing oscillations in said vibrating element (10) of a resonant frequency corresponding to each mode of elastic deformation of said deformable shaft (11) so that said scanning element bends (7) and twists in at least two directions by the elastic deformation of said deformable shaft (11); characterised by
a rotary device (2) for rotating said scanner (1) on an axis substantially perpendicular relative to said mirror surface (9).

2. An optical scanning device according to Claim 2, wherein the frequency ratio of the resonant frequencies of said two modes of resonance is 1:N, where N is at least 2.

3. An optical scanning device according to Claim 1 or Claim 2, wherein said rotary device (2) is reversible and rotates said mirror surface (9) less than 180° in any direction using a reference position as a starting point.

4. An optical scanning device according to Claim 3, wherein said rotary device (2) rotates said mirror surface (9) in a periodic fashion so that the period of movement of said mirror surface is longer than the longest period of resonant vibration of said drive source (8).

5. An optical scanning device according to Claim 1, wherein said rotary device (2) causes said mirror surface (9) to rotate in step fashion corresponding to preselected specific angles.

6. An optical scanning device according to any preceding Claim, wherein said drive source (8) for inducing vibrations includes a laminated piezoelectric element or an element using electrostatic force to induce resonance of said deformable shaft (11).

7. An optical scanning device according to any preceding claim, wherein said scanning element (7) and a part of said rotary device (2) are formed on a single-crystal silicon wafer (18).

8. An optical scanning and detecting device, comprising:
a light source (26) or emitting a beam of light;
an optical scanning device as defined in claim 1 ;
a photodetector element (28) for receiving said beam of light reflected by said optical scanning device; and
a processing device (31) for receiving electrical signals outputted by said photodetector element.

9. An optical scanning and detecting device according to Claim 8, wherein said beam of light emitted by said light source (26) is made incident on said optical scanning device to scan an object so that said beam reflected by the object can be detected and identify presence of said object or said shape.

10. An optical scanning and detecting device according to Claim 8 or Claim 9, further comprising a scanning position detector circuit (34) to monitor a scanning position to allow detection of an orientation, shape and size of an object.

11. An optical scanning and detecting device according to any one of Claims 8 to 10, wherein said light source is a semiconductor laser configured so that said beam of light reflected by said optical scanning device has a round cross section with a vertical-to-horizontal ratio of 1:1.

12. An optical scanning and detecting device according to any one of Claims 8 to 11, wherein the device is configured to read coded data in a form of bar code, multistage bar code, or two-dimensional code in a form of matrix which are labeled on an object.

13. An optical scanning and detecting device according to any one of Claims 8 to 12, further comprising a control unit (32) that can be programmed to a preselected orientation of coded data on one or more objects so that said optical scanning device can scan in a direction substantially parallel to a path along which said coded data is oriented.

14. An optical scanning and detecting device according to any one of Claims 8 to 13, further comprising an orientation detector device (38) to detect an orientation of a coded data so that said beam of light is made to scan virtually parallel to a path along which said coded data is oriented.

15. A device according to any one of Claims 10 to 14, further comprising a memory device (38) for storing an angle of rotation of said vibrating element from a previous scanning operation of coded data so that the next scanning operation begins from said angle of rotation detected by the previous angle of rotation from the previous scanning operation.

16. A point of sales system, comprising:
an optical scanning and detecting device as defined in Claim 8 ;
processing and display means (41,43) for interpreting coded data on each product, and for checking the data against product data such as name of product and price, which were stored previously in an external memory unit (42); displaying to the exterior the results of the data check; and storing this result in a second memory unit (44).

17. A device according to any one of Claims 8 to 15, wherein the device is configured so that the beam of light is reflected is virtually in the center of said mirror surface.

## Patentansprüche

1. Optisches Abtastgerät, umfassend:
einen Scanner (1), der Folgendes enthält:
ein Abtastelement (7), das mit einer Spiegeloberfläche (9) ausgestattet ist;
einen elastisch verformbaren Schaft (11), der an einem seiner Enden das Abtastelement (7) frei trägt, wobei der verformbare Schaft (11) zur Verbiegung fähig ist und zumindest zwei Resonanzschwingungsmodi aufweist;
ein schwingendes Element (10), das am anderen Ende des verformbaren Schafts (11) angeordnet ist, wobei das Abtastelement (7), der verformbare Schaft (11) und das schwingende Element (10) einstückig als flaches, plattenartiges Element ausgebildet sind; und
eine Betätigungsquelle (8), um Schwingungen im schwingenden Element (10) hervorzurufen, wobei die Betätigungsquelle (8) im schwingenden Element (10) Schwingungen mit einer Resonanzfrequenz hervorrufen kann, die jedem Modus elastischer Verformung des verformbaren Schafts (11) entspricht, sodass sich das Abtastelement (7) durch die elastische Verformung des verformbaren Schafts (11) in zumindest zwei Richtungen verbiegt und twistet; gekennzeichnet durch
eine Drehvorrichtung (2) zum Verdrehen des Scanners (1) um eine in Bezug zur Spiegeloberfläche (9) im Wesentlichen senkrechten Achse.

2. Optisches Abtastgerät nach Anspruch 2, worin das Frequenzverhältnis der Resonanzfrequenzen der beiden Resonanzmodi 1:N ist, worin N zumindest 2 ist.

3. Optisches Abtastgerät nach Anspruch 1 oder 2, worin die Drehvorrichtung (2) umkehrbar ist und die Spiegeloberfläche (9) unter Verwendung einer Referenzposition als Ausgangspunkt um weniger als 180° in jeder Richtung verdreht.

4. Optisches Abtastgerät nach Anspruch 3, worin die Drehvorrichtung (2) die Spiegeloberfläche (9) solcherart periodisch verdreht, dass die Bewegungsperiode der Spiegeloberfläche länger als die längste Periode der Resonanzschwingung der Betätigungsquelle (8) ist.

5. Optisches Abtastgerät nach Anspruch 1, worin die Drehvorrichtung (2) bewirkt, dass sich die Spiegeloberfläche (9) schrittweise in Einklang mit vorgewählten bestimmten Winkeln verdreht.

6. Optisches Abtastgerät nach einem der vorhergehenden Ansprüche, worin die Betätigungsquelle (8) zum Hervorrufen von Schwingungen ein laminiertes piezoelektrisches Element oder ein Element enthält, das mittels elektrostatischer Kräfte eine Resonanz des verformbaren Schafts (11) hervorruft.

7. Optisches Abtastgerät nach einem der vorhergehenden Ansprüche, worin das Abtastelement (7) und ein Teil der Drehvorrichtung (2) auf einem EinkristallSiliziumplättchen (18) gebildet sind.

8. Optisches Abtast- und Detektiergerät, umfassend:
eine Lichtquelle (26) zum Ausstrahlen eines Lichtstrahls;
ein optisches Abtastgerät nach Anspruch 1;
ein Photodetektorelement (28) zum Empfang des durch das optische Abtastgerät reflektierten Lichtstrahls; und
ein Verarbeitungsgerät (31) zum Empfang von durch das Photodetektorelement ausgesendeten elektrischen Signalen.

9. Optisches Abtast- und Detektiergerät nach Anspruch 8, worin der durch die Lichtquelle (26) ausgestrahlte Lichtstrahl auf das optische Abtastgerät auftrifft, um einen' Gegenstand abzutasten, sodass der durch den Gegenstand reflektierte Strahl detektiert werden und die Gegenwart des Gegenstands oder der Form identifizieren kann.

10. Optisches Abtast- und Detektiergerät nach Anspruch 8 oder 9, weiters umfassend eine Abtastpositionsdetektorschaltung (34), um eine Abtastposition zu überwachen, sodass das Detektieren der Ausrichtung, Form und Größe eines Gegenstands ermöglicht wird.

11. Optisches Abtast- und Detektiergerät nach einem der Ansprüche 8 bis 10, worin die Lichtquelle ein Halbleiterlaser ist, der solcherart konfiguriert ist, dass der durch das optische Abtastgerät reflektierte Lichtstrahl einen runden Querschnitt mit einem Vertikal-Horizontal-Verhältnis von 1:1 aufweist.

12. Optisches Abtast- und Detektiergerät nach einem der Ansprüche 8 bis 11, worin das Gerät solcherart konfiguriert ist, dass es kodierte Daten in Form eines Strichcodes, Mehrphasenstrichcodes oder zweidimensionalen Codes in Form einer Matrix liest, die auf einem Gegenstand aufgebracht sind.

13. Optisches Abtast- und Detektiergerät nach einem der Ansprüche 8 bis 12, weiters umfassend eine Steuereinheit (32), die auf eine vorgewählte Ausrichtung kodierter Daten auf einem oder mehreren Gegenständen programmiert werden kann, sodass das optische Abtastgerät in einer Richtung abtasten kann, die im Wesentlichen parallel zu einem Weg ist, entlang dem die kodierten Daten ausgerichtet sind.

14. Optisches Abtast- und Detektiergerät nach einem der Ansprüche 8 bis 13, weiters umfassend eine Ausrichtungsdetektorvorrichtung (38), um eine Ausrichtung kodierter Daten zu detektieren, sodass der Lichtstrahl praktisch parallel zu einem Weg abtasten kann, entlang dem die kodierten Daten ausgerichtet sind.

15. Gerät nach einem der Ansprüche 10 bis 14, weiters umfassend eine Speichervorrichtung (39) zum Speichern eines Rotationswinkels des schwingenden Elements aus einem vorhergehenden Abtastvorgang kodierter Daten, sodass der nächste Abtastvorgang beim Rotationswinkel beginnt, der durch den vorhergehenden Rotationswinkel aus dem vorhergehenden Abtastvorgang detektiert wird.

16. In einem Verkaufslokal zu verwendendes System, umfassend:
ein optisches Abtast- und Detektiergerät nach Anspruch 8;
Verarbeitungs- und Anzeigemittel (41, 43) zum Interpretieren kodierter Daten auf jedem Produkt und zum Prüfvergleichen der Daten mit Produktdaten wie z.B. dem Produktnamen und dem Preis, die zuvor in einer externen Speichereinheit (42) gespeichert wurden; zum Anzeigen der Ergebnisse des Datenprüfvergleichs; und zum Speichern dieses Ergebnisses in einer zweiten Speichereinheit (44).

17. Gerät nach einem der Ansprüche 8 bis 15, worin das Gerät solcherart konfiguriert ist, dass sich der reflektierte Lichtstrahl praktisch im Mittelpunkt der Spiegeloberfläche befindet.

## Revendications

1. Dispositif de balayage optique, comprenant:
un scanneur (1), comprenant:
un élément de balayage (7) pourvu d'une surface de miroir (9);
un arbre élastiquement déformable (11) pour supporter librement à une extrémité de celui-ci ledit élément de balayage (7), ledit arbre déformable (11) pouvant fléchir, et ayant au moins deux modes de vibration de résonnance;
un élément vibrant (10) prévu sur une autre extrémité dudit arbre déformable (11), où ledit élément de balayage (7), ledit arbre déformable (11) et ledit élément vibrant (10) sont intégralement formés en un élément analogue à une plaque plane; et
une source de commande (8) pour induire des vibrations dans ledit élément vibrant (10), ladite source de commande (8) pouvant induire des oscillations dans ledit élément vibrant (10) d'une fréquence de résonnance correspondant à chaque mode de déformation élastique dudit arbre déformable (11) de sorte que ledit élément de balayage (7) fléchit et se tord dans au moins deux directions par la déformation élastique dudit arbre déformable (11); caractérisé par
un dispositif rotatif (2) pour entraîner une rotation ledit scanneur (1) sur un axe sensiblement perpendiculaire par rapport à ladite surface de miroir (9).

2. Dispositif de balayage optique selon la revendication 1, dans lequel le rapport de fréquence des fréquences de résonnance des deux modes précités de résonnance est de 1:N, où N est d'au moins 2.

3. Dispositif de balayage optique selon la revendication 1 ou la revendication 2, dans lequel le dispositif rotatif précité (2) est réversible et fait tourner la surface de miroir (9) précitée moins que 180° dans toute direction utilisant une position de référence comme point de départ.

4. Dispositif de balayage optique selon la revendicaiton 3, dans lequel le dispositif rotatif précité (2) fait tourner la surface de miroir précitée (9) d'une façon périodique de sorte que la période de mouvement de ladite surface de miroir est supérieure à la période la plus longue de vibration de résonnance de la source de commande précitée (8).

5. Dispositif de balayage optique selon la revendication 1, dans lequel le dispositif rotatif (2) amène la surface de miroir précitée (9) à tourner de façon par échelon correspondant à des angles spécifiques présélectionnés.

6. Dispositif de balayage optique selon l'une quelconque des revendications précédentes, dans lequel la source de commande précitée (8) pour induire des vibrations comprend un élément piézoélectrique laminé ou un élément utilisant une force électrostatique pour induire une résonnance de l'arbre déformable précité (11).

7. Dispositif de balayage optique selon l'une quelconque des revendications précédentes, dans lequel l'élément de balayage précité (7) et une partie du dispositif rotatif précité (2) sont formés sur une plaquette de silicium monocristal (10).

8. Dispositif de balayage et de détection optique, comprenant:
une source de lumière (26) pour émettre un faisceau de lumière;
un dispositif de balayage optique tel que défini dans la revendication 1;
un élément photodétecteur (28) pour recevoir ledit faisceau de lumière réfléchi par ledit dispositif de balayage optique;
un dispositif de traitement (31) pour recevoir des signaux électriques produits par ledit élément photodétecteur.

9. Dispositif de balayage et de détection optique selon la revendication 8, dans lequel le faisceau précité de lumière émis par la source de lumière précitée (26) est rendu incident sur ledit dispositif de balayage optique pour balayer un objet de sorte que ledit faisceau réfléchi par l'objet peut être détecté et identifier la présence dudit objet ou de ladite forme.

10. Dispositif de balayage et de détection optique selon la revendication 8 ou la revendication 9, comprenant de plus un circuit détecteur de position de balayage (34) pour contrôler une position de balayage pour permettre une détection d'une orientation, de forme et d'une dimension d'un objet.

11. Dispositif de balayage et de détection optique selon l'une quelconque des revendications 8 à 10, dans lequel la source de lumière précitée est un laser à semi-conducteur configuré de sorte que le faisceau précité de lumière réfléchie par ledit dispositif de balayage optique a une section ronde avec un rapport vertical-horizontal de 1:1.

12. Dispositif de balayage et de détection optique selon l'une quelconque des revendications 8 à 11, dans lequel le dispositif est configuré pour lire des données codées sous une forme de code à barres, de code à barres multiétages ou de code à deux dimensions sous une forme de matrice qui sont étiquetés sur un objet.

13. Dispositif de balayage et de détection optique selon l'une quelconque des revendications 8 à 12, comprenant de plus une unité de commande (32) qui peut être programmée à une orientation présélectionnée de données codées sur un ou plusieurs objets de sorte que ledit dispositif de balayage optique peut balayer dans une direction sensiblement parallèle à un trajet le long duquel lesdites données codées sont orientées.

14. Dispositif de balayage et de détection optique selon l'une quelconque des revendications 8 à 13, comprenant de plus un dispositif détecteur d'orientation (38) pour détecter une orientation de données codées de sorte que le faisceau précité de lumière est réalisé pour balayer virtuellement parallèle à un trajet le long duquel lesdites données codées sont orientées.

15. Dispositif selon l'une quelconque des revendications 10 à 14, comprenant de plus un dispositif mémoire (39) pour mémoriser un angle de rotation de l'élément vibrant précité à partir d'une opération de balayage initiale de données codées de sorte que l'opération de balayage suivante commence à partir dudit angle de rotation détecté par l'angle initial de rotation à partir de l'opération de balayage initiale.

16. Point de système de ventes, comprenant:
un dispositif de balayage et de détection optique comme défini en revendication 8;
un moyen de traitement et de visualisation (41, 43) pour interpréter des données codées sur chaque produit et pour vérifier les données par rapport à des données de produit telles que le nom et le prix du produit, qui ont été initialement mémorisées dans une unité de mémoire externe (42); visualiser à l'extérieur les résultats de la vérification des données; et mémoriser ce résultat dans une seconde unité de mémoire (44).

17. Dispositif selon l'une quelconque des revendications 8 à 15, dans lequel le dispositif est configuré de sorte que le faisceau de lumière qui est réfléchi est virtuellement au centre de la surface de miroir précitée.
